# EUROPEAN PATENT SPECIFICATION

(11) **EP 4 605 580 B1**
(45) Date of publication and mention of the grant of the patent: **21.01.2026**
(21) Application number: 23806091.7
(22) Date of filing: 18.10.2023
(51) Int. Cl.: C25B 1/04, C25B 9/05, C25B 9/73, C25B 15/00, C25B 15/02, C25B 15/027, C25B 15/08

(54) **ELECTROLYZER SYSTEM WITH VAPORIZER COOLING SYSTEM**
ELEKTROLYSEURSYSTEM MIT VERDAMPFERKÜHLSYSTEM
SYSTÈME D'ÉLECTROLYSEUR AVEC SYSTÈME DE REFROIDISSEMENT DE VAPORISATEUR

(30) Priority: 21.10.2022 US 202263418101 P
(43) Date of publication of application: 27.08.2025
(73) Proprietor: Fuelcell Energy, Inc., Danbury, CT 06810 (US)
(72) Inventor: MALWITZ, Jonathan, Danbury, Connecticut 06810 (US)
(74) Representative: Carpmaels & Ransford LLP
(86) International application number: PCT/US2023/035429
(87) International publication number: WO 2024/086236

(56) References cited:
- KR-Y1- 200 366 454

## Description

### BACKGROUND

The present disclosure relates generally to the field of electrochemical cells, such as fuel cells and electrolyzer cells, and more particularly to electrolyzer cell systems with exhaust recycle systems.

Generally, a fuel cell includes an anode, a cathode, and an electrolyte layer that together drive chemical reactions to produce electricity. Multiple fuel cells may be arranged in a stack to produce a desired amount of electricity. Fuel, such as hydrogen gas or hydrocarbon gas, is supplied to the anode while oxidant is supplied to the cathode. The fuel and oxidant are used up by the electrochemical reactions as they flow over the anode and cathode, respectively.

A fuel cell may be operated in reverse as an electrolyzer cell in which the anode acts as a cathode and the cathode acts as the anode. In electrolyzer mode, an external power source provides an electric current to the cell. Steam is supplied to the cathode (the fuel cell anode) and air is supplied to the anode (the fuel cell cathode). Oxygen ions from the steam cross over to the anode, while the hydrogen remains in the cathode. The air supplied to the anode dilutes the oxygen and sweeps it out of the electrolyzer cell. The cathode outputs a mixture of hydrogen gas and unreacted steam that is recycled to the cathode after being further humidified in a vaporizer 102.
KR 200366454 relates to an alkaline water ionizer capable of ionizing water to alkaline water, and also to an electrolyzer and a cooling water reservoir.

### SUMMARY

Systems and methods of the current disclosure relate to an electrolyzer system that includes a cold water storage tank that can provide cold water to a vaporizer tank to rapidly cool the water in the vaporizer tank in the event of a system malfunction.

The invention is defined as in the claims.

### BRIEF DESCRIPTION OF THE DRAWINGS

FIG. 1 is a schematic diagram of an electrolyzer system, according to an exemplary embodiment.

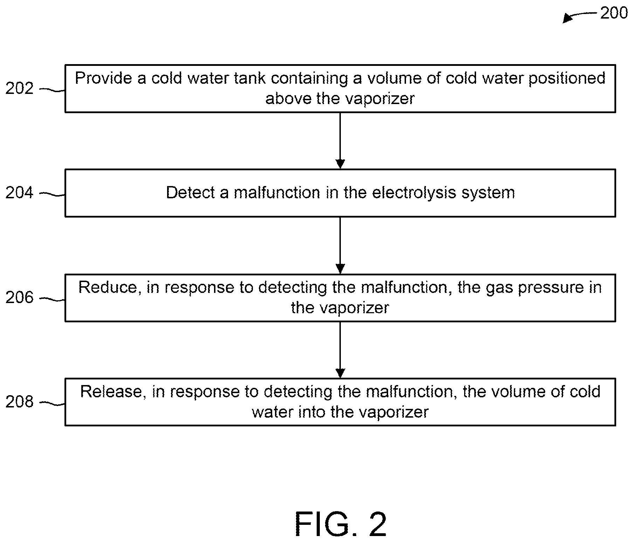

FIG. 2 is a flow diagram of a method of cooling a vaporizer in an electrolyzer system, according to an exemplary embodiment.

### DETAILED DESCRIPTION

Electrolyzer cell systems may be operated at elevated pressures to improve efficiency. Large pressure differentials between the anodes and cathodes can result in damage to the cells and other components in the system. In the event of a sudden loss of power to an electrolyzer cell system (e.g., upon the occurrence of a system failure, power outage, etc.), the system may be configured to reduce the pressure to both the anodes and the cathodes of the electrolyzer cells to reduce the pressure differential and prevent damage. For example, both the anodes and cathodes of the electrolyzer cells may be vented to atmospheric pressure (e.g., ambient pressure) upon the occurrence of a power failure.

An electrolyzer cell cathode recycle stream comprising hydrogen and steam may be further humidified in a vaporizer (e.g., a bubbler humidifier), which may include a pressurized tank of water heated to temperatures above 100 degrees Celsius. Because the water is heated to above 100 degrees Celsius, reducing the cathode pressure to protect the electrolyzer cells can cause rapid boiling and vaporization of the water in the tank, which can result in the water boiling out of the tank. This may damage electrolyzer system equipment.

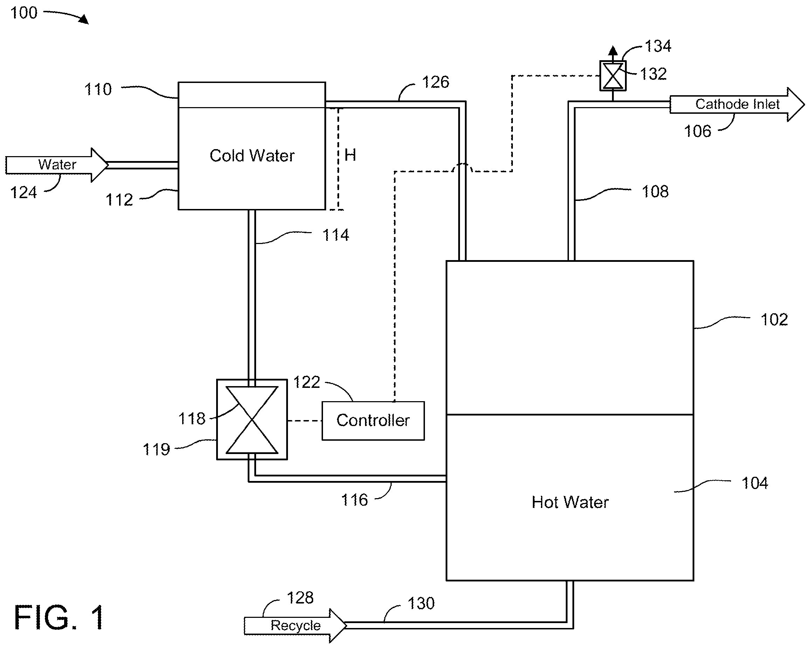

Referring now to FIG. 1, an electrolyzer system 100 is shown, according to an exemplary embodiment. The vaporizer 102 includes a water tank and a heat source and is configured to boil hot water 104 (e.g., a first volume of water) to humidify a cathode inlet stream 106. The cathode inlet stream 106 is directed to a cathode of an electrolyzer cell (e.g., a solid oxide electrolyzer cell) or to cathodes of multiple electrolyzer cells arranged in one or more stacks in an electrolyzer cell module. During operation of the electrolyzer system 100, the hot water 104 in the vaporizer 102 is maintained at an elevated temperature and pressure. For example, the hot water 104 may be maintained at a temperature above 100 degrees Celsius and a pressure above 1 atm. A recycle stream 128 from the electrolyzer containing hydrogen gas and steam is input via pipe 130 into the bottom of the vaporizer 102. The hot water 104, which may be stored in the vaporizer 102 as a liquid, is boiled in the vaporizer 102, and the steam generated, as well as the hydrogen gas and steam from the recycle stream 128, travels to the cathode of the electrolyzer via a pipe 108 as a cathode inlet stream 106. In the event of rapid depressurization in the vaporizer 102, for example, due to a sudden shutdown of the electrolyzer system 100 due to a power failure, the hot water 104 may rapidly boil as the boiling point of water drops with the pressure in the vaporizer 102.

The electrolyzer system 100 includes a cold water tank 110 containing cold water 112 (e.g., a second volume of water) positioned at a height greater than that of the vaporizer 102. The cold water 112 is below 100 degrees Celsius. For example, the cold water 112 may be approximately 25 degrees Celsius, or between 15 degrees Celsius and 35 degrees Celsius. In the event of sudden depressurization of the vaporizer 102, the cold water 112 may flow into to the vaporizer 102 to rapidly cool the hot water 104. The cold water 112 may travel through pipes 114 and 116 to the vaporizer 102 under the force of gravity. The cold water tank 110 may be positioned at any location that allows the cold water 112 to flow into the vaporizer 102 under the force of gravity. The volume and temperature of the cold water 112 are such that when the cold water 112 flows into the vaporizer 102 102, the temperature of the hot water 104 falls from a temperature above 100 degrees Celsius to a temperature below 100 degrees Celsius, thus stopping the boiling and vaporization of the hot water 104. In some embodiments, pipe 116 may be fluidly coupled to the vaporizer 102 at a position below the water level of the hot water 104 to allow a controlled flow of water into the vaporizer 102. The amount of water that remains in the pipes 114, 116 after the cold water 112 flows into the vaporizer 102 can be taken into account when determining the volume of cold water 112 required. In some embodiments, pipe 116 may be coupled to the vaporizer 102 at a position high enough that all of the cold water 112 can flow out of the pipes 114, 116.

During normal operation of the electrolyzer system 100, a valve 118 (e.g., a valve of a valve assembly) remains closed, preventing the cold water 112 from traveling from pipe 114 to pipe 116 and into the vaporizer 102. Upon the occurrence of a power outage (e.g., a power failure), the cathode side and anode side of the electrolyzer cells may be allowed to drop to atmospheric pressure to protect the cells from large pressure differentials. When the pressure on the cathode side drops, the hot water 104 in the vaporizer 102, which is above 100 degrees Celsius, may rapidly boil unless it is cooled. The valve 118 is configured to open upon the occurrence of a power failure so that the cold water 112 can cool the hot water 104. For example, the valve 118 may be a "fail open" valve that requires an electrical signal to remain closed. When there is a power outage in the electrolyzer system 100, and no electrical signal can reach the valve 118, the valve 118 will open. As noted above, the cold water tank 110 is positioned at a height greater than that of the vaporizer 102. When the valve 118 opens, cold water 112 flows through pipe 114, valve 118, and pipe 116 under the force of gravity into the vaporizer 102. The cold water 112 mixes with the hot water 104 in the vaporizer 102 to rapidly cool the hot water 104 to a temperature below 100 degrees Celsius, thus stopping the hot water 104 from boiling at atmospheric pressure.

In some embodiments, other events may trigger the opening of the valve 118. For example, the electrolyzer system 100 may include a controller 122 configured to control the pressure in the electrolyzer cells and to open and close the valve 118. The controller 122 may receive information from various sensors indicating a malfunction that requires a shutdown of the electrolyzer cell system 100 and a drop in pressure to both the anode side and cathode side of the electrolyzer cells. For example, a sudden change in temperature in the electrolyzer cells, a sudden change in voltage or current consumed by the electrolyzer cells, or a sudden change in gas flow to the electrolyzer cells could indicate that there is a malfunction in the system 100. It should be understood that "sudden," as used above, may refer to any changes that occur more rapidly than would be expected under normal operating conditions of the electrolyzer system 100. The controller 122 can be configured to open valves to drop the pressure to the anode side and the cathode side of the electrolyzer cells and to open the valve 118. For example, the controller 122 may open the valve 118 in response to receiving an indication of a malfunction in the anode air blower, which causes the anode pressure to drop. These examples are not intended to be limiting. The controller 122, in response to various indications of a malfunction in the system 100, may be configured to rapidly reduce the pressure in both sides of the electrolyzer cells and to open the valve 118 to allow the cold water 112 to flow into the vaporizer 102.

Cold water is fed into a cold water inlet of the cold water tank 110 via a fresh water inlet stream 124. The water from fresh water inlet stream 124 may be deionized water at approximately 25 degrees Celsius or between 15 degrees Celsius and 35 degrees Celsius. When the cold water 112 in the cold water tank 110 reaches a height H, cold water can flow into the vaporizer 102 via pipe 126. During normal system operation, water may be fed into the cold water tank 110 and may flow into the vaporizer 102 at a substantially equal rate to the rate at which vaporized water exits the vaporizer 102 via pipe 108. Thus, the water level in the vaporizer 102 may remain substantially constant as vaporized water is replaced by water from the cold water tank 110 via pipe 126. The height H at which pipe 126 is coupled to the cold water tank 110 is determined based on the volume of cold water 112 in the cold water tank 110 required to rapidly cool the vaporizer 102 in the event of sudden depressurization. For example, if it is determined that two cubic meters of water is required to cool the hot water 104 in the vaporizer 102 to below 100 degrees Celsius, and the cold water tank 110 is rectangular with a width of one meter and a length of one meter, the height H may be two meters. By coupling pipe 126 to the cold water tank 110 at height H, the vapor space pressures of both the vaporizer 102 and the cold water tank 110 may be balanced, allowing unimpeded flow of cold water to the vaporizer through the pipes 114, 116 when valve 118 is opened. Pipe 126 may also maintain a constant volume of water in the cold water tank 110, as any water in the cold water tank 110 above height H may flow through pipe 126 to the vaporizer 102.

Further, because the pipe 126 is coupled to the top of the vaporizer 102 and the top of the cold water tank 110 vaporized water and other gases from the vaporizer 102 can travel through the pipe 126 to the cold water tank 110. When the valve 118 opens to rapidly cool the vaporizer 102, gas from the vaporizer 102 can flow through the pipe 126 to replace the volume of the cold water tank 110 as the cold water 112 flows out. Thus, the pipe 126 acts as a vacuum break to allow the cold water 112 to flow freely into the vaporizer 102.

### Configuration of Exemplary Embodiments

As utilized herein, the terms "approximately," "about," "substantially", and similar terms are intended to have a broad meaning in harmony with the common and accepted usage by those of ordinary skill in the art to which the subject matter of this disclosure pertains. It should be understood by those of skill in the art who review this disclosure that these terms are intended to allow a description of certain features described and claimed without restricting the scope of these features to the precise numerical ranges provided. Accordingly, these terms should be interpreted as indicating that insubstantial or inconsequential modifications or alterations of the subject matter described and claimed are considered to be within the scope of the invention as recited in the appended claims.

The terms "coupled," "connected," and the like as used herein mean the joining of two members directly or indirectly to one another. Such joining may be stationary (e.g., permanent) or moveable (e.g., removable or releasable). Such joining may be achieved with the two members or the two members and any additional intermediate members being integrally formed as a single unitary body with one another or with the two members or the two members and any additional intermediate members being attached to one another.

References herein to the positions of elements (e.g., "top," "bottom," "above," "below," etc.) are merely used to describe the orientation of various elements in the FIGURES. It should be noted that the orientation of various elements may differ according to other exemplary embodiments, and that such variations are intended to be encompassed by the present disclosure.

## Claims

1. An electrolyzer system (100) comprising:
a vaporizer (102) configured to store a first volume of liquid water and to vaporize water to humidify a cathode inlet stream (106) of an electrolyzer cell module;
a cold water tank (112) positioned at a height greater than that of the first volume of liquid water and configured to store a second volume of water; and
a valve (118) configured to open and close, wherein the water from the cold water tank is allowed to flow through the valve and into the vaporizer when the valve is open.

2. The electrolyzer system of claim 1, further comprising a controller (122) configured to reduce the pressure in the vaporizer and to open the valve in response to receiving an indication of a malfunction in the electrolyzer system.

3. The electrolyzer system of claim 2, wherein the indication of the malfunction comprises one or more of: a sudden change in temperature in the electrolyzer cell module, a sudden change in voltage in the electrolyzer cell module, a sudden change in current generated in the electrolyzer cell module, a sudden change in gas flow rate or pressure to the electrolyzer cell module, or a detected malfunction in an anode air blower.

4. The electrolyzer system of claim 2, further comprising a pressure release valve configured to open to reduce the pressure in the vaporizer in response to a command from the controller.

5. The electrolyzer system of claim 1, wherein the valve is a fail open valve that requires an electrical signal to remain closed.

6. The electrolyzer system of claim 1, wherein the vaporizer is configured to receive a recycle stream from the electrolyzer cell module and to humidify the recycle stream to form the cathode inlet stream.

7. The electrolyzer system of claim 1, wherein:
the cold water tank comprises a cold water inlet configured to receive additional water; and
the electrolyzer system further comprises a pipe (126) with a first end fluidly coupled to the cold water tank at a first height above the bottom of the cold water tank and a second end fluidly coupled to the vaporizer at a position above a water level of the first volume of liquid water.

8. The electrolyzer system of claim 7, wherein the pipe is configured to allow water from the second volume of water to flow into the vaporizer via the pipe when the second volume of water exceeds the first height, and/or wherein the pipe is configured to allow gas to flow from the vaporizer into the cold water tank when the second volume of water flows into the vaporizer.

9. A method of cooling a vaporizer (102) in an electrolyzer system (100), the vaporizer containing a volume of hot liquid water, the method comprising:
detecting a malfunction in the electrolyzer system, and, in response to detecting such malfunction:
reducing a gas pressure in the vaporizer; and
releasing a volume of cold water into the vaporizer from a cold water tank (112) that is positioned at a height greater than that of the volume of hot liquid water, wherein the cold water is below 100 degrees Celsius.

10. The method of claim 9, wherein releasing the volume of cold water into the vaporizer comprises opening a valve (118) positioned between the cold water tank and the vaporizer, and/or wherein the cold water tank and the vaporizer are arranged such that the cold water flows into the vaporizer under the force of gravity.

11. The method of claim 9, wherein reducing the gas pressure in the vaporizer comprises opening a pressure release valve, and/or wherein reducing the gas pressure in the vaporizer comprises reducing the gas pressure from a pressure above ambient pressure to ambient pressure.

12. The method of claim 9, wherein the malfunction comprises one or more of: a sudden change in temperature in an electrolyzer cell module of the electrolyzer system, a sudden change in voltage in the electrolyzer cell module, a sudden change in current generated in the electrolyzer cell module, a sudden change in gas flow rate or pressure to the electrolyzer cell module, or a malfunction in an anode air blower.

13. The method of claim 9, wherein the cold water is released into the vaporizer at a position below the top of the volume of hot liquid water, and/or wherein the volume of cold water has a volume and a temperature such that, when the volume of cold water flows into the vaporizer, the temperature of the volume of hot liquid water in the vaporizer drops from 100 degrees Celsius or higher to below 100 degrees Celsius.

14. The method of claim 9, further comprising supplying additional cold water to the cold water tank, wherein cold water is allowed to flow into the vaporizer when the volume of cold water exceeds a first height in the cold water tank, wherein the volume of cold water has a volume below the first height and a temperature such that, when the volume of cold water flows into the vaporizer, the temperature of the volume of hot liquid water in the vaporizer drops from 100 degrees Celsius or higher to below 100 degrees Celsius.

15. The method of claim 9, further comprising:
supplying an electrolyzer cell recycle stream to the vaporizer; and
vaporizing water in the vaporizer to humidify the electrolyzer cell recycle stream.

## Patentansprüche

1. Elektrolyseursystem (100), umfassend:
einen Verdampfer (102), der dazu ausgelegt ist, ein erstes Volumen flüssigen Wassers zu speichern und Wasser zu verdampfen, um einen Kathodeneinlassstrom (106) eines Elektrolyseurzellenmoduls zu befeuchten;
einen Kaltwasserbehälter (112), der in einer Höhe positioniert ist, die größer ist als die des ersten Volumens flüssigen Wassers, und dazu ausgelegt ist, ein zweites Wasservolumen zu speichern; und
ein Ventil (118), das zum Öffnen und Schließen ausgelegt ist, wobei das Wasser aus dem Kaltwasserbehälter durch das Ventil und in den Verdampfer fließen kann, wenn das Ventil offen ist.

2. Elektrolyseursystem nach Anspruch 1, ferner umfassend eine Steuerung (122), die dazu ausgelegt ist, in Reaktion auf das Empfangen einer Anzeige einer Fehlfunktion in dem Elektrolyseursystem den Druck im Verdampfer zu verringern und das Ventil zu öffnen.

3. Elektrolyseursystem nach Anspruch 2, wobei die Anzeige der Fehlfunktion eines oder mehrere von Folgenden umfasst: eine plötzliche Änderung der Temperatur im Elektrolyseurzellenmodul, eine plötzliche Änderung der Spannung im Elektrolyseurzellenmodul, eine plötzliche Änderung des Stroms, der im Elektrolyseurzellenmodul erzeugt wird, eine plötzliche Änderung der Gasflussrate oder des Gasdrucks zum Elektrolyseurzellenmodul oder eine erkannte Fehlfunktion in einem Anodenluftgebläse.

4. Elektrolyseursystem nach Anspruch 2, ferner umfassend ein Druckentlastungsventil, das dazu ausgelegt ist, sich in Reaktion auf einen Befehl von der Steuerung zu öffnen, um den Druck im Verdampfer zu verringern.

5. Elektrolyseursystem nach Anspruch 1, wobei das Ventil ein Fail-open-Ventil ist, das ein elektrisches Signal erfordert, um geschlossen zu bleiben.

6. Elektrolyseursystem nach Anspruch 1, wobei der Verdampfer dazu ausgelegt ist, einen Rücklaufstrom aus dem Elektrolyseurzellenmodul zu empfangen und den Rücklaufstrom zu befeuchten, um den Kathodeneinlassstrom zu bilden.

7. Elektrolyseursystem nach Anspruch 1, wobei:
der Kaltwasserbehälter einen Kaltwassereinlass umfasst, der dazu ausgelegt ist, zusätzliches Wasser zu empfangen; und
das Elektrolyseursystem ferner ein Rohr (126) mit einem ersten Ende, das mit dem Kaltwasserbehälter in einer ersten Höhe über dem Boden des Kaltwasserbehälters fluidgekoppelt ist, und einem zweiten Ende umfasst, das mit dem Verdampfer in einer Position über einem Wasserstand des ersten Volumens flüssigen Wassers fluidgekoppelt ist.

8. Elektrolyseursystem nach Anspruch 7, wobei das Rohr dazu ausgelegt ist, Wasser aus dem zweiten Wasservolumen über das Rohr in den Verdampfer fließen zu lassen, wenn das zweite Wasservolumen die erste Höhe überschreitet, und/oder wobei das Rohr dazu ausgelegt ist, Gas aus dem Verdampfer in den Kaltwasserbehälter strömen zu lassen, wenn das zweite Wasservolumen in den Verdampfer fließt.

9. Verfahren zum Kühlen eines Verdampfers (102) in einem Elektrolyseursystem (100), wobei der Verdampfer ein Volumen heißen flüssigen Wassers enthält, wobei das Verfahren Folgendes umfasst:
Erkennen einer Fehlfunktion im Elektrolyseursystem und als Reaktion auf der Erkennen solch einer Fehlfunktion: Verringern des Gasdrucks im Verdampfer; und
Ablassen eines Volumens kalten Wassers in den Verdampfer aus einem Kaltwasserbehälter (112), der in einer Höhe positioniert ist, die größer ist als die des Volumens heißen flüssigen Wassers, wobei das kalte Wasser unter 100 Grad Celsius ist.

10. Verfahren nach Anspruch 9, wobei das Ablassen des Volumens des kalten Wassers in den Verdampfer Öffnen eines Ventils (118) umfasst, das zwischen dem Kaltwasserbehälter und dem Verdampfer positioniert ist, und/oder wobei der Kaltwasserbehälter und der Verdampfer so angeordnet sind, dass das Kaltwasser unter der Schwerkraft in den Verdampfer fließt.

11. Verfahren nach Anspruch 9, wobei das Verringern des Gasdrucks im Verdampfer Öffnen eines Druckentlastungsventils umfasst und/oder wobei das Verringern des Gasdrucks im Verdampfer Verringern des Gasdrucks von einem Druck über dem Umgebungsdruck auf den Umgebungsdruck umfasst.

12. Verfahren nach Anspruch 9, wobei die Fehlfunktion eines oder mehrere von Folgenden umfasst: eine plötzliche Änderung der Temperatur in einem Elektrolyseurzellenmodul des Elektrolyseursystems, eine plötzliche Änderung der Spannung im Elektrolyseurzellenmodul, eine plötzliche Änderung des Stroms, der im Elektrolyseurzellenmodul erzeugt wird, eine plötzliche Änderung der Gasflussrate oder des Gasdrucks zum Elektrolyseurzellenmodul oder eine erkannte Fehlfunktion in einem Anodenluftgebläse.

13. Verfahren nach Anspruch 9, wobei das kalte Wasser an einer Position unter der Oberseite des Volumens heißen flüssigen Wassers in den Verdampfer abgelassen wird und/oder wobei das Volumen kalten Wassers solch ein Volumen und solch eine Temperatur aufweist, dass, wenn das Volumen kalten Wassers in den Verdampfer fließt, die Temperatur des Volumens heißen flüssigen Wassers im Verdampfer von 100 Grad Celsius oder höher auf unter 100 Grad Celsius abfällt.

14. Verfahren nach Anspruch 9, ferner umfassend Zuführen von zusätzlichem kaltem Wasser zum Kaltwasserbehälter, wobei kaltes Wasser in den Verdampfer fließen gelassen wird, wenn das Volumen kalten Wassers eine erste Höhe im Kaltwasserbehälter überschreitet, wobei das Volumen kalten Wassers solch ein Volumen unter der ersten Höhe und solch eine Temperatur aufweist, dass, wenn das Volumen kalten Wassers in den Verdampfer fließt, die Temperatur des Volumens heißen flüssigen Wassers im Verdampfer von 100 Grad Celsius oder höher auf unter 100 Grad Celsius abfällt.

15. Verfahren nach Anspruch 9, ferner umfassend:
Zuführen eines Elektrolyseurzellenrücklaufstroms zum Verdampfer; und
Verdampfen von Wasser im Verdampfer, um den Elektrolyseurzellenrücklaufstrom zu befeuchten.

## Revendications

1. Système d'électrolyseur (100) comprenant :
un vaporiseur (102) conçu pour stocker un premier volume d'eau liquide et pour vaporiser de l'eau afin d'humidifier un courant d'entrée de cathode (106) d'un module de cellules d'électrolyseur ;
un réservoir d'eau froide (112) positionné à une hauteur supérieure à celle du premier volume d'eau liquide et conçu pour stocker un deuxième volume d'eau ; et
une vanne (118) conçue pour s'ouvrir et se fermer, l'eau provenant du réservoir d'eau froide pouvant s'écouler à travers la vanne et jusqu'à l'intérieur du vaporiseur lorsque la vanne est ouverte.

2. Système d'électrolyseur de la revendication 1, comprenant en outre un dispositif de commande (122) conçu pour réduire la pression dans le vaporiseur et pour ouvrir la vanne en réponse à la réception d'une indication d'un dysfonctionnement dans le système d'électrolyseur.

3. Système d'électrolyseur de la revendication 2, dans lequel l'indication du dysfonctionnement comprend un ou plusieurs des éléments suivants : une brusque variation de température dans le module de cellules d'électrolyseur, une brusque variation de tension dans le module de cellules d'électrolyseur, une brusque variation de courant généré dans le module de cellules d'électrolyseur, une brusque variation de débit ou pression de gaz vers le module de cellules d'électrolyseur, et un dysfonctionnement détecté dans un ventilateur d'anode.

4. Système d'électrolyseur de la revendication 2, comprenant en outre une soupape de décharge de pression conçue pour s'ouvrir afin de réduire la pression dans le vaporiseur en réponse à une commande provenant du dispositif de commande.

5. Système d'électrolyseur de la revendication 1, dans lequel la vanne est une vanne à ouverture par défaut qui nécessite un signal électrique pour rester fermée.

6. Système d'électrolyseur de la revendication 1, dans lequel le vaporiseur est conçu pour recevoir un courant de recyclage provenant du module de cellules d'électrolyseur et pour humidifier le courant de recyclage afin de former le courant d'entrée de cathode.

7. Système d'électrolyseur de la revendication 1, dans lequel :
le réservoir d'eau froide comprend une entrée d'eau froide conçue pour recevoir de l'eau supplémentaire ; et
le système d'électrolyseur comprend en outre un tuyau (126) avec une première extrémité couplée fluidiquement au réservoir d'eau froide à une première hauteur au-dessus du fond du réservoir d'eau froide et une deuxième extrémité couplée fluidiquement au vaporiseur à une position au-dessus d'un niveau d'eau du premier volume d'eau liquide.

8. Système d'électrolyseur de la revendication 7, dans lequel le tuyau est conçu pour permettre à de l'eau provenant du deuxième volume d'eau de s'écouler à l'intérieur du vaporiseur par le tuyau lorsque le deuxième volume d'eau dépasse la première hauteur, et/ou dans lequel le tuyau est conçu pour permettre à du gaz de s'écouler depuis le vaporiseur à l'intérieur du réservoir d'eau froide lorsque le deuxième volume d'eau s'écoule à l'intérieur du vaporiseur.

9. Procédé de refroidissement d'un vaporiseur (102) dans un système d'électrolyseur (100), le vaporiseur contenant un volume d'eau liquide chaude, le procédé comprenant :
la détection d'un dysfonctionnement dans le système d'électrolyseur et, en réponse à la détection d'un tel dysfonctionnement :
la réduction d'une pression de gaz dans le vaporiseur ; et
la libération d'un volume d'eau froide à l'intérieur du vaporiseur depuis un réservoir d'eau froide (112) qui est positionné à une hauteur supérieure à celle du volume d'eau liquide chaude, l'eau froide étant à moins de 100 degrés Celsius.

10. Procédé de la revendication 9, dans lequel la libération du volume d'eau froide à l'intérieur du vaporiseur comprend l'ouverture d'une vanne (118) positionnée entre le réservoir d'eau froide et le vaporiseur, et/ou dans lequel le réservoir d'eau froide et le vaporiseur sont agencés de telle sorte que l'eau froide s'écoule à l'intérieur du vaporiseur sous l'effet de la gravité.

11. Procédé de la revendication 9, dans lequel la réduction de la pression de gaz dans le vaporiseur comprend l'ouverture d'une soupape de décharge de pression, et/ou dans lequel la réduction de la pression de gaz dans le vaporiseur comprend la réduction de la pression de gaz depuis une pression supérieure à la pression ambiante jusqu'à la pression ambiante.

12. Procédé de la revendication 9, dans lequel le dysfonctionnement comprend un ou plusieurs des éléments suivants : une brusque variation de température dans le module de cellules d'électrolyseur du système d'électrolyseur, une brusque variation de tension dans le module de cellules d'électrolyseur, une brusque variation de courant généré dans le module de cellules d'électrolyseur, une brusque variation de débit ou pression de gaz vers le module de cellules d'électrolyseur, et un dysfonctionnement dans un ventilateur d'anode.

13. Procédé de la revendication 9, dans lequel l'eau froide est libérée à l'intérieur du vaporiseur à une position située sous le sommet du volume d'eau liquide chaude, et/ou dans lequel le volume d'eau froide a un volume et une température tels que, lorsque le volume d'eau froide s'écoule à l'intérieur du vaporiseur, la température du volume d'eau liquide chaude dans le vaporiseur chute de 100 degrés Celsius ou plus à moins de 100 degrés Celsius.

14. Procédé de la revendication 9, comprenant en outre la fourniture d'eau froide supplémentaire au réservoir d'eau froide, l'eau froide pouvant s'écouler à l'intérieur du vaporiseur lorsque le volume d'eau froide dépasse une première hauteur dans le réservoir d'eau froide, le volume d'eau froide ayant un volume en dessous de la première hauteur et une température telle que, lorsque le volume d'eau froide s'écoule à l'intérieur du vaporiseur, la température du volume d'eau liquide chaude dans le vaporiseur chute de 100 degrés Celsius ou plus à moins de 100 degrés Celsius.

15. Procédé de la revendication 9, comprenant en outre :
la fourniture d'un courant de recyclage de cellules d'électrolyseur au vaporiseur ; et
la vaporisation d'eau dans le vaporiseur pour humidifier le courant de recyclage de cellules d'électrolyseur.
